# EUROPEAN PATENT APPLICATION

(11) **EP 1 684 462 A1**
(43) Date of publication of application: **26.07.2006**
(21) Application number: 05290169.1
(22) Date of filing: 24.01.2005
(51) Int. Cl.: H04L 12/24

(54) **Element management server and method for managing multi-service network elements**

(71) Applicant: ALCATEL, 75008 Paris (FR)
(72) Inventor: Paparella, Andrea, 21052 Busto Arsizio (Varese) (IT); Riglietti, Roberto, 20059 Vimercate (Milano) (IT); Romualdi, Roberto, 20161 Milano (IT)
(74) Representative: Menzietti, Domenico

(57) **Abstract**

Disclosed is an element management server and method for managing a multi-service network element in a network. The multi-service network element comprises: a first subsystem based on a first transmission technology comprising a first set of resources described by a first information model; and a second subsystem based on a second transmission technology comprising a second set of resources described by a second information model. The element management server is characterized in that it comprises: a common description system providing a common description of the resources comprised into said multi-service network element; and at least an adapter module, which is suitable to map said first information model and/or said second information model into said common description.

## Description

The present invention relates to an Element Management server and method for managing, in a telecommunication network, a multi-service network element, i.e. a network element comprising at least two subsystems which are based on different transmission technologies.

It is known that the management of a telecommunication network can be performed by means of a management network which is termed Telecommunication Management Network (TMN). The TMN network, similarly to a telecommunication network, from the functional point of view is divided into layers, each layer being responsible for carrying out a number of management tasks. Each layer communicates with its upper layer through an "agent", and with its lower layer through a "manager".

In particular, the lowest layer of the TMN hierarchy, which is termed Element Management Layer (EML), is responsible for managing single network elements from a primary equipment point of view. Examples of management tasks carried out by the EML layer are:
- configuration of boards, termination points, connections between resources;
- error detection;
- power consumption estimation;
- network element temperature estimation;
- employed resources estimation (e.g., CPU usage percentage, buffer available space, queue length, ...);
- registration of statistical parameters;
- software upgrade; and
- collection of performance measurements.

For each network element, such tasks are performed by an equipment which is termed Element Management Server (EMS). The EMS server may be, for instance, a computer which is physically connected to the network element to be managed. In particular, the EMS server is provided with a manager which is adapted to communicate with a respective agent, which is placed into the network element.

Besides, the EMS server is provided with an agent, which communicates with the upper layer of the TMN hierarchy. Such a layer will not be described, as it is not useful in order to understand the present invention.

As mentioned above, each EMS server communicates with a respective network element to be managed. In order to perform the management operations, the EMS server needs information about the resources located within the network element. These information may be located, for example:
- in a centralised database, located within the EMS server; or
- in a local database, located within the network element.

As already mentioned above, in order to communicate with the respective EMS server, each network element has an agent, i.e. a software application which is adapted to communicate with a respective manager. In particular, if the EMS server is not provided with a centralised database, one of the agent tasks is providing the EMS server with a description or Information Model of information contained into the local database. According to the network element type, the Information Model may be, for example, an object-oriented Information Model or a relational Information Model. An object-oriented Information Model may be represented as a tree diagram, while a relational Information Model may be represented as a table or a set of tables.

For example, in an object-oriented Information Model, each resource is an object of the Information Model. If the object-oriented Information Model is represented as a tree diagram, each object corresponds to a node of the tree diagram. Each resource is described by a set of attributes, i.e. by a set of features describing the resource and its status. Each resource may in turn comprise other resources, or secondary resources. Each secondary resource is described by a set of attributes, and may in turn comprise other resources. Besides, each resource may be correlated to another resource; in this case, among the attributes of the resource, it is possible to insert a link, i.e. a pointer to said other resource.

As it will be described in greater detail below, if, for instance, the resource is a board, the attributes may be board type, board part number or the like. Moreover, the board may comprise other resources such as software components, and links to other resources such as ports and/or termination points.

The communication between the Information Model of a network element and the EML layer is regulated by a Protocol. The Protocol allows to transport information contained into the Information Model to the EML layer and *vice versa.*

It is known that a telecommunication network may be of different types. A telecommunication network may be either a circuit switched network, such as an SDH/Sonet network, or a packet switched network, such as Ethernet networks, ATM networks, RPR networks or the like. The network management principles explained above are valid for all these types of telecommunication networks. However, both the type of Information Model and the type of Protocol depend on the type of telecommunication network, and consequently on the type of network element.

For example, in SDH networks, the network elements are generally described through a Q3 object-oriented Information Model, based on a Protocol which is termed CMIP/CMISE. In Ethernet or ATM networks, the network elements are generally described through an SNMP MIB table Information Model, based on a Protocol which is termed SNMP. In Sonet networks, the network elements are generally described through a TL1 command-based Information Model, based on a Protocol which is termed TPTAPS.

Thus, managing network elements of different types requires providing different EMS servers adapted to manage the respective network elements through suitable Information Models and Protocols.

Integrated transport networks are known in the art; an integrated transport network generally comprises different sub-networks based on different transmission technologies. For instance, an integrated transport network may comprise a transport backbone implemented through SDH technology, and different packet switched local networks (for instance ATM, Ethernet, RPR or others). Such integrated transport networks generally comprise multi-service network elements. A multi-service network element is a network element comprising different subsystems which are based on different transmission technologies. Consequently, managing a multi-service network element requires an EMS server which is able to manage all the subsystems located within the multi-service network element. In the present description and in the appended claims, the term "multi-service network element" will refer to a system comprising two or more different subsystems which are based on different transmission technologies. Such different subsystems could be located either at a substantially single physical location or at two or more physical locations.

Two solutions are known for managing a multi-service network element.

According to the first solution, an EMS server managing a multi-service network element is provided with a separated manager for each agent of each subsystem comprised within the multi-service network element. Possibly, each manager is provided with a respective Graphic User Interface, as it will be explained in greater detail below. Each manager allows managing a respective subsystem. Thus, the multi-service network element is not managed as a single network element, each subsystem being managed independently from the other subsystems. This solution exhibits some disadvantages.

First of all, each management software of each subsystem must be developed substantially independently from the other subsystems. This implies that software developers must know all the Information Models and Protocols required by the different subsystems. Thus, according to this solution, the software development cost is very high.

Moreover, when a new subsystem is added to the multi-service network element, and this subsystem is based on a transmission technology other than those which are already present into the network element, it is very difficult to reuse parts of the management software which have already been developed for other transmission technologies. Thus, the software upgrade cost is very high as well.

Moreover, as different management software programs are developed substantially independently one from the others (and possibly by different developers, in different programming languages), they can exhibit lack of homogeneity. In particular, Graphic User Interfaces associated with different managers may be different. Thus, a network operator who wishes to configure a multi-service network element, necessarily has to learn to deal with different graphic interfaces. This raises the lack of integration of different technologies, thus implying low service integration and high operational cost of the network.

A second solution is known from US 6,708,207 B1, which describes a network element comprising a first subsystem operable to receive management transactions in a first management protocol and to map the transactions to a common management protocol. A second subsystem is operable to receive management transactions in a second management protocol and to map the transactions to a common management protocol. A common management information base (CMIB) includes a dataset and a common interface to the dataset. The common interface is operable to access the dataset to process transactions received from the first and the second subsystems in the common management protocol.

In practice, as it will be detailed below, the network element is provided with a common database CMIB, wherein all the single databases corresponding to each subsystem are mapped.

According to this solution, however, a multi-service network element, from the EMS server point of view, is still substantially managed as a set of separated subsystems. Each subsystem comprises a separated agent, each agent providing a respective manager located into the EML server with a separated Information Model of the respective subsystem. Thus, the management solution described by US 6,708,207 B1 still suffers the disadvantages of the first solution described above: high software development costs, high software upgrade costs, lack of homogeneity between management software programs, and in particular lack of homogeneity between Graphic User Interfaces.

A first object of the present invention is providing an EMS server for managing a multi-service network element which overcomes the aforesaid problems.

In particular, an object of the present invention is providing an EMS server for managing a multi-service network element which allows to have:
- high flexibility in adding new resources into the multi-service network element;
- high degree of re-usage of the management software; and
- high homogeneity of management interfaces,
thus reducing the cost of development/upgrade of the management software.

These and other objects are achieved, according to the present invention, by an EMS server for managing a multi-service network element according to claim 1, a method for managing a multi-service network element according to claim 9 and a telecommunication network according to claim 17.

Further advantageous features are set forth into the respective dependent claims. All claims are deemed to be an integral part of the present description.

According to the present invention, it is provided an EMS server for managing a multi-service network element in a telecommunication network. The multi-service network element comprises at least two subsystems, each subsystem being based on a different transmission technology. Thus, each subsystem is described by a different Information Model, each Information Model being provided by a respective agent, which is adapted to communicate with the EML layer through a respective Protocol. According to the present invention, the EMS server comprises a Common Description System, i.e. a system providing a common description of all the resources comprised into all the subsystems of the multi-service network element. According to the present invention, the EMS server further comprises, for each Protocol used by the agents, a respective Adapter Module, allowing to map each single Information Model into the Common Description System.

According to a preferred embodiment of the present invention, the Common Description System represents the resources of the multi-service network element in an object oriented representation.

Advantageously, such an object oriented representation may be in form of a tree diagram. The source node of the tree diagram is the multi-service network element itself, comprising:
- resources whose description (i.e. the set of attributes) is at least in part common to all the Information Models of all the subsystems included into the multi-service network element; and
- a group of resources, comprising:

- resources whose description (i.e. the set of attributes) is at least in part common to a subset of Information Models of a subset of subsystems included into the multi-service network element.

The Common Description System of the multi-service network node may comprise more than one group.

Besides, it must be noticed that the above definition of the Common Description System is limited to the first two layers of the tree diagram. However, it can be noticed that such a definition is recursive; then, it is possible to provide embodiments of the present invention, wherein groups comprise not only resources having common descriptions, but also sub-groups, which in turn comprise resources having common descriptions, and so on.

According the present invention, the EMS server is further provided with a Common Graphic User Interface, through which a service provider may configure and manage the multi-service network element.

Thus, if the service provider wishes, for instance, either to retrieve information about a resource, or configure a resource, according to the present invention the service provider performs the retrieving/configuring operations through the Common Graphic User Interface. In other words, the service provider always deals with a resource description which is technology-independent; then, a suitable Adapter Module translates the operations performed by the service provider upon the resource as described by the Common Description System in operations upon the resource as described by the respective Information Model.

Thus, according to the present invention, a service provider is no more required to deal with different transmission technologies through different Graphic User Interfaces. On the contrary, the service provide only must know the functioning of a unique Common Graphic User Interface, as the translation into the single technologies is performed by the Adapter Modules.

Besides, when inserting into a multi-service network element a new subsystem, which comprises a resource whose description is common to the description of a resource already located within the multi-service network element, software already developed can be reused. In fact, the resource already located within the multi-service network element is already described by the Common Description System. Hence, upgrading the management software simply requires inserting a suitable Adapter Module which is adapted to map the new resource into the Common Description System, thus allowing to reduce the software development/upgrade cost.

Furthermore, providing the EMS server with a Common Description System allows to simplify the management operations performed by the upper layers of the TMN hierarchy. For instance, when upper TMN layers (such as the Network Management Layers) need to retrieve information from the network elements, they can refer to the Common Description System of the EMS servers. This allows to simplify the management software programs of the NML layer, thus further increasing technology integration and reducing the operational cost of the network.

In a first aspect, the present invention provides an element management server for managing a multi-service network element in a telecommunication network. The multi-service network element comprises a first subsystem based on a first transmission technology comprising a first set of resources described by a first information mode, and a second subsystem based on a second transmission technology comprising a second set of resources described by a second information model. The element management server according to the present invention further comprises a common description system, providing a common description of the resources comprised into said multi-service network element, and at least an adapter module, which is suitable to map said first information model and/or said second information model into said common description.

According to one embodiment, the common description system provides an object oriented common description of the resources. Preferably, the object oriented common description is in the form of a tree diagram. The tree diagram comprises a source node, at least one intermediate node and at least one terminal node. The source node corresponds to the multi-service network element, the at least one intermediate node corresponds to at least one group of resources comprised within the network element and the at least one terminal node corresponds to at least one resource comprised within the network element.

Optionally, the server comprises a common graphic user interface.

According to one embodiment, the description of each resource comprises a set of attributes and links to other resources. In this case, the adapter module is preferably suitable to select attributes and links to be mapped in the common description, and to map and/or synthesize attributes and links in the common description.

In a second aspect, the present invention provides a method for managing a multi-service network element in a telecommunication network. The multi-service network element comprises a first subsystem based on a first transmission technology comprising a first set of resources and a second subsystem based on a second transmission technology comprising a second set of resources. The method comprises describing the first set of resources by a first information model and describing the second set of resources by a second information model. According to the invention, the method is characterised by providing a common description of the resources comprised into the multi-service network element and mapping the first information model and/or the second Information Model in the common description.

According to one embodiment, the step of providing a common description comprises the step of providing an object oriented common description of the resources. Preferably, the step of providing an object oriented common description comprises the step of providing a common description in the form of a tree diagram. The tree diagram comprises a source node, at least one intermediate node and at least one terminal node. The source node corresponds to the multi-service network element, the at least one intermediate node corresponds to at least one group of resources comprised within the network element and the at least one terminal node corresponds to at least one resource comprised within the network element.

Optionally, the method further comprises the step of providing a common graphic user interface.

According to one embodiment, the steps of describing the first set of resources by a first information model and describing the second set of resources by a second information model comprise a step of describing a set of attributes and links to said resources. In this case, the step of mapping preferably comprises selecting attributes and links to be mapped in the common description, and mapping and/or synthesizing attributes and links in the common description.

According to a third aspect, the present invention provides a common description system providing a common description of resources comprised into a multi-service network element in a telecommunication network, said multi-service network element comprising: a first subsystem based on a first transmission technology comprising a first set of resources described by a first information model; and a second subsystem based on a second transmission technology comprising a second set of resources described by a second information model.

Advantageously, the common description system cooperates with at least an adapter module which is suitable to map the first information model and/or the second information model into the common description.

According to a fourth aspect, the present invention provides an adapter module for mapping a first information model and/or a second information model into a common description system of an element management server for managing a multi-service network element in a telecommunication network, said multi-service network element comprising: a first subsystem based on a first transmission technology comprising a first set of resources described by the first information model; and a second subsystem based on a second transmission technology comprising a second set of resources described by the second information model, said common description system providing a common description of the resources comprised into said multi-service network element.

According to a fifth aspect, the present invention provides a common graphic user interface for configuring and/or managing a multi-service network element, said multi-service network element comprising: a first subsystem based on a first transmission technology comprising a first set of resources described by a first information model; and a second subsystem based on a second transmission technology comprising a second set of resources described by a second information model, wherein it cooperates with a common description system providing a common description of the resources comprised into said multi-service network element.

Preferably, the common graphic user interface is adapted to display both configurable parameters for the first subsystem and configurable parameters for the second system. Just as an example, such parameters could comprise, for a port, traffic type (SDH, Sonet, Ethernet, ATM, etc...); bitrate; alarm list; signal degradation alarm threshold; client signal type (optical or electrical) and flow control.

Finally, according to a sixth aspect, the present invention provides a telecommunication network comprising at least one element management server as set forth above.

Further features and advantages of the present invention will become clear by the following detailed description, given by way of example and not of limitation, to be read with reference to the accompanying drawings, wherein:
- Figure 1 schematically shows a portion of the TMN hierarchy, in particular at the interface between the EML layer and the NEL layer;
- Figure 2 schematically shows a portion of an object-oriented Information Model describing a primary resource of a network element;
- Figures 3a and 3b show two examples of primary resources, a board and a port respectively, described by the Information Model of Figure 2;
- Figures 4a and 4b schematically show two known solutions for managing a multi-service network element;
- Figures 5a and 5b schematically show an EMS server for managing a multi-service network element according to the present invention, and an embodiment thereof, respectively;
- Figures 6a, 6b and 6c show a description of a resource provided by a Common Description System according to the present invention, and two embodiments thereof, respectively; and
- Figures 7a and 7b show the structure of a Common Description System according to the present invention, and an embodiment thereof, respectively.

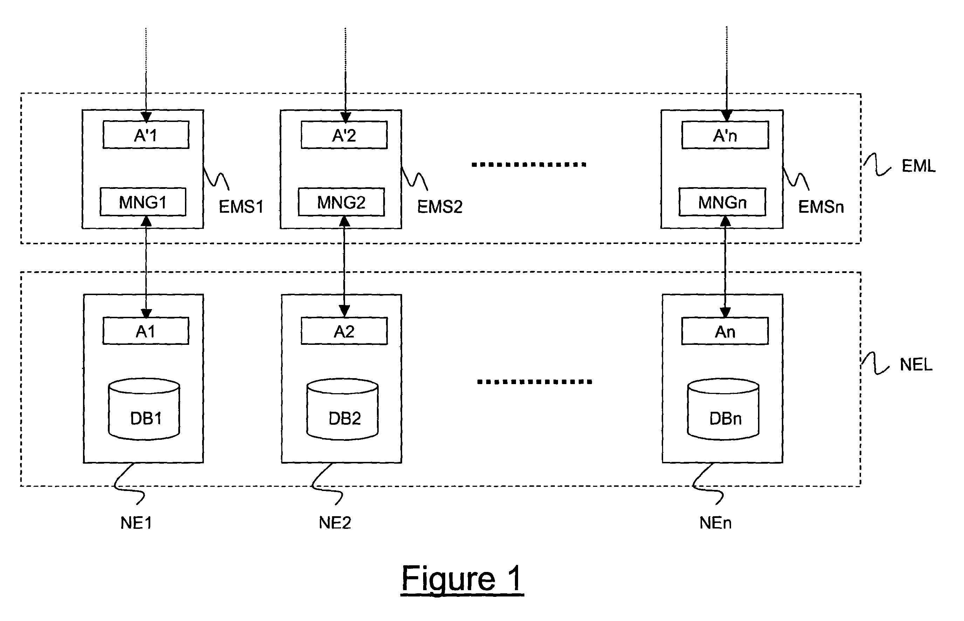

Figure 1 schematically shows a portion of TMN hierarchy. Such a portion of TMN hierarchy comprises an EML layer, which is responsible for managing the single network elements, as mentioned above. Each network element comprises components adapted to support the management functions. Such components are part of the so-called Network Element Layer NEL, which is a base layer supporting the TMN hierarchy.

Figure 1 shows n network elements NE1, NE2 ... NEn. Each network element comprises a respective agent A1, A2, ... An, acting as an interface between the network element and the EML layer. Further, each network element comprises a respective database DB1, DB2, ... DBn, which comprises all the information about the characteristics and operational status of the resources of the network element.

The EML layer comprises, for each network element NE1, NE2, ... NEn, a respective EMS server EMS1, EMS2, ... EMSn. Each server is provided with a respective manager MNG1, MNG2, ... MNGn. Each manager communicates with a respective agent A1, A2, ...An located into the respective network element. Further, each EMS server comprises a respective agent A'1, A'2, ...A'n interfacing the EMS server with the upper layer of the TMN hierarchy (not shown in Figure 1).

As mentioned above, each network element NE1, NE2 ... NEn comprises a database DB1, DB2, ... DBn. Each database comprises information about the resources of the respective network element. This information is typically used by each EMS server in order to perform the management tasks. Hence, the agent A1, A2, ... An of each network element provides the respective EMS server with an Information Model of the information contained into the respective database. For instance, such an Information Model may be object oriented.

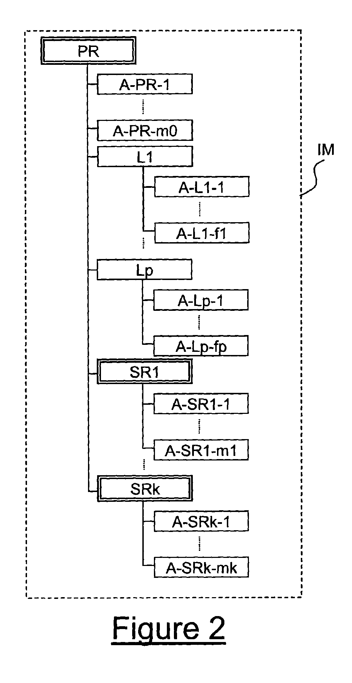

Figure 2 shows a portion of an object oriented Information Model IM of a network element, in the form of a tree diagram. Generally speaking, a network element comprises resources. In the following, the term "primary resource" PR will refer to a resource which is not contained into any other resource. Figure 2 shows a portion of an Information Model IM of a network element comprising a single primary resource PR. Such a resource may be for instance a board, as it will be explained in further detail herein after. The primary resource PR may be described by a set of m0 attributes A-PR-1, ... A-PR-m0, i.e. through a set of m0 features describing the structure, the operating status and other characteristics of the resource PR.

Besides, the primary resource PR may comprise k secondary resources SR1, ... SRk, each secondary resource being in turn described by a respective set of attributes, such as:
- attributes of SR1: A-SR1-1, ... A-SR1-m1;
- attributes of SRk: A-SRk-1, ... A-SRk-mk.

For instance, if PR is a board, examples of secondary resources may be software packages installed on the board, as well as ports or termination points of the board.

Besides, the primary resource PR may be correlated to other primary resources (not shown in Figure 2) through special attributes called "links" (L1, ... Lp in Figure 2). The links L1, ... Lp act like pointers to other resources correlated to the primary resource PR. Each link may comprise attributes, such as:
- attributes of L1: A-L1-1, ... A-L1-f1;
- attributes of Lp: A-Lp-1, ... A-Lp-fp.

For instance, an attribute of a link may be a path identifying the location wherein the resource to which the link points is placed in the Information Model IM.

Generally speaking, if the hardware structure of a network element is simple, all the resources correlated to a primary resource may be represented as secondary resources. Otherwise, if the network element structure is complex, i.e. there are many resources with many attributes, it is preferable to represent resources correlated to a primary resource through links.

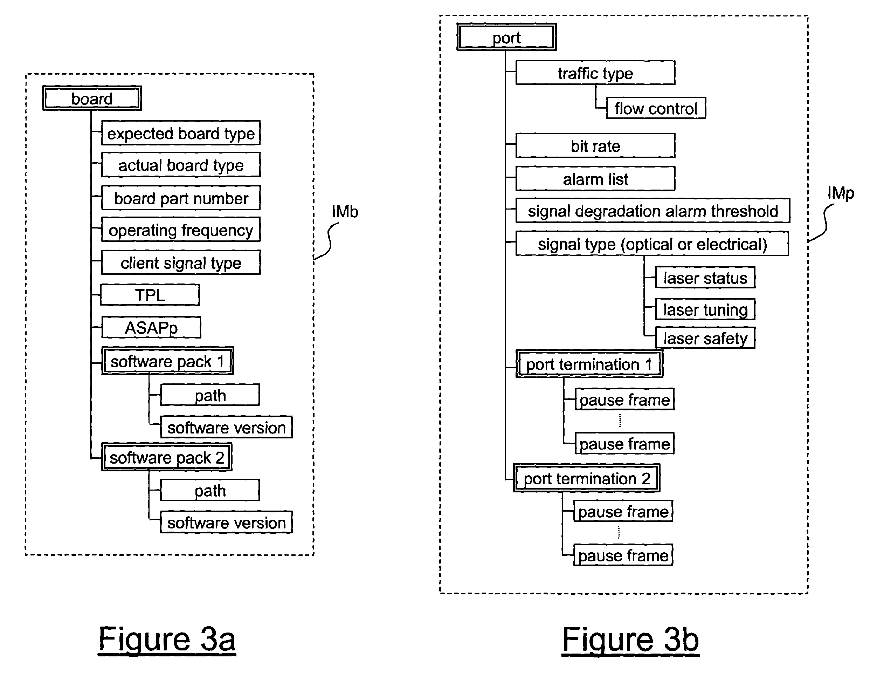

Figure 3a and 3b show two examples of description of two resources through an object oriented Information Model IM in the form of a tree diagram. Such representations are referenced with IMb and IMp, respectively.

For instance, Figure 3a shows an Information Model IMb of a board. Examples of possible attributes for a board are:
- expected board type;
- actual board type;
- board part number;
- operating frequency; and
- signal type.

It has to be observed that the above cited attributes are defined for every type of board, i.e. for ATM boards, Ethernet boards, RPR boards or other. This allows to insert this description of a board into a Common Description System according to the present invention, as it will be described in greater detail herein after.

Besides, the board may comprise an ASAP pointer ASAPp, i.e. a link to an Alarm Severity Assignment Profile ASAP. Moreover, the board may comprise a Termination Point List TPL, i.e. a link containing a list of all the pointers to the termination points of the board.

Finally, in the example of Figure 3a, the board comprises two software packages as secondary resources. Each software package is characterised by a number of attributes, such as:
- path; and
- software version.

In the following, a second example of primary resource represented through an object-oriented Information Model will be described, by referring to Figure 3b. It is assumed that the primary resource PR is a port. Examples of attributes for a port may be:
- supported traffic type (SDH, Sonet, Ethernet, ATM, etc.);
- bit rate;
- alarm list;
- signal degradation alarm threshold;
- signal type (optical or electrical).

The above cited attributes are defined for any type of port, independently from the transmission technology upon which the port is based. Besides, technology-dependent attributes may be defined for a port. For instance, if the port is an optical port, further attributes are required such as:
- laser status;
- laser tuning; and
- laser safety.

Moreover, if the port supports Ethernet traffic, an additional attribute is required for the flow control of the port.

The port may also comprise secondary resources. For instance, the port may comprise the termination points of the port. If the port has a plurality of termination points, such termination points are advantageously inserted into the Information Model IMp through suitable links (e.g., a link TPL). In case the termination points are represented as secondary resources (as shown in Figure 3b), each termination point may comprise attributes such as the Pause Frames of the termination points.

As mentioned above, an integrated transport network is a telecommunication network comprising sub-networks based on different technologies. Thus, an integrated transport network may comprise multi-service network elements. Each network element comprises more than one subsystem, each subsystem being based on a different transmission technology.

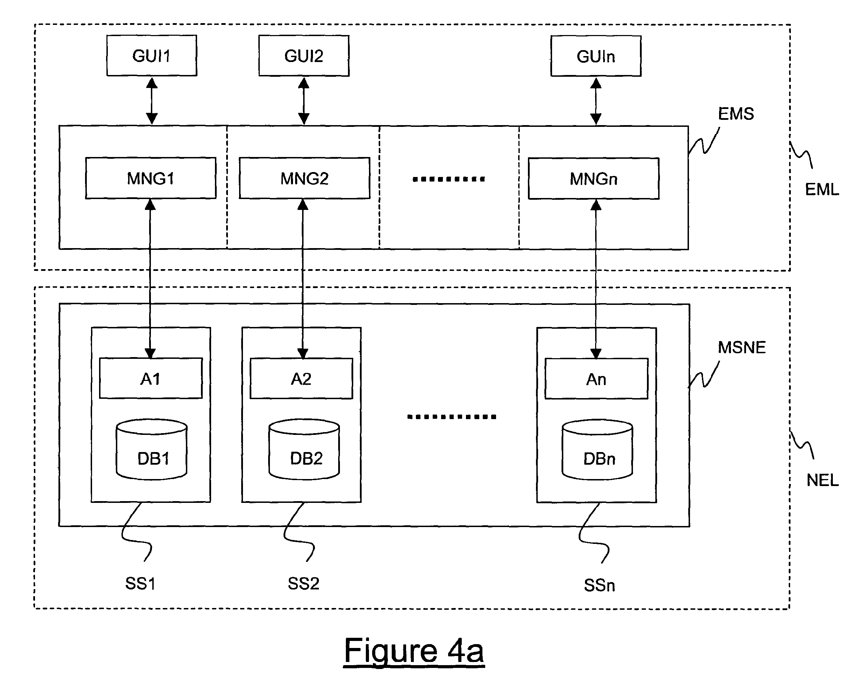

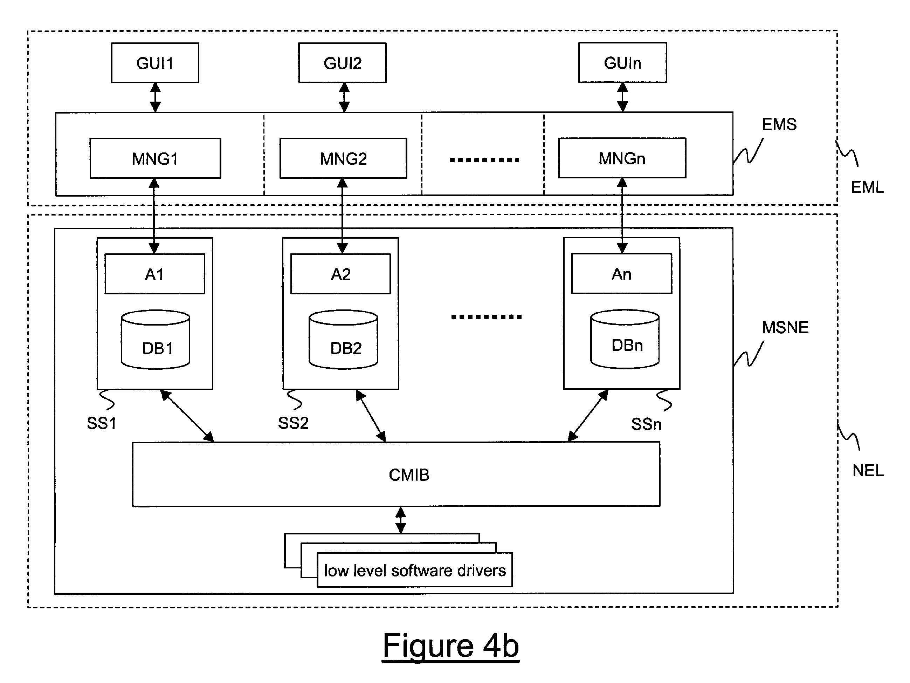

Figures 4a and 4b show a multi-service network element comprising n subsystems SS1, SS2, ... SSn, each subsystem being based on a different transmission technology. These subsystems may be, for instance:
- an SDH subsystem (for instance, an ADM-SDH);
- a Sonet subsystem (for instance, an ADM-Sonet);
- an ATM subsystem (for example, an ATM board);
- a PREA subsystem (for example, a PREA board);
- a FE subsystem (for example, a FE board); or
- an RPR subsystem (for example, an RPR board).

Each subsystem shown in Figures 4a and 4b is provided with a respective database DB1, DB2, ... DBn, and with a respective agent A1, A2, ...An providing the EML layer with an Information Model of the respective database.

As already mentioned, methods for managing a multi-service network element are known in the art. Figure 4a shows a first known method for managing a multi-service network element. According to this known solution, the server EMS is provided with a number of managers MNG1, MNG2, ... MNGn, each manager communicating with a respective agent A1, A2, ... An which is placed into a respective subsystem SS1, SS2, ... SSn. Each manager is also provided with a respective Graphic User Interface GUI1, GUI2, ... GUIn. Thus, a service provider who wishes to manage such a multi-service network element MSNE separately manages each subsystem SS1, SS2, ... SSn through a respective Graphic User Interface GUI1, GUI2, ... GUIn.

Figure 4b schematically shows a second known method, substantially as described by US 6,708,207 B1, for managing a multi-service network element. According to this solution, a multi-service network element comprises a Common Management Information Base CMIB, which allows to map all the single databases DB1, DB2, ... DBn of the single subsystems in a common database interfacing with the low level software drivers. The server EMS of Figure 4b comprises a separate manager MNG1, MNG2, ... MNGn for each agent of the network element MSNE, and each manager is associated with a respective Graphic User Interface GUI1, GUI2, ... GUIn.

Thus, in the known solutions shown in Figures 4a and 4b, each subsystem of the network element MSNE is managed independently by a respective portion of the EMS server. Each portion is developed substantially independently from the others, acts substantially independently from the others and is provided with a respective Graphic User Interface, thus implying the above cited disadvantages.

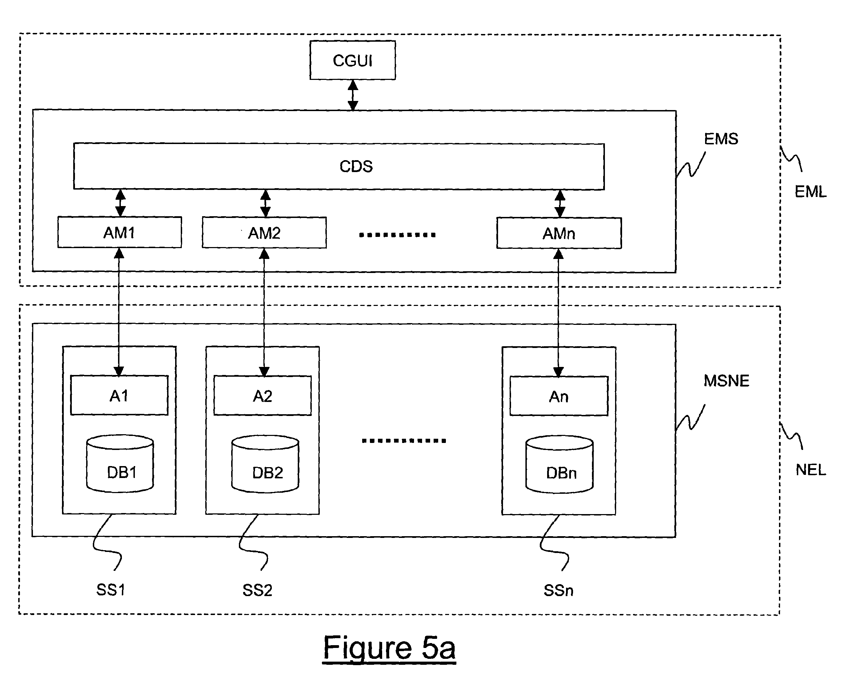

Figure 5a schematically shows an server EMS according to the present invention, which manages a multi-service network element MSNE comprising a number n of subsystems SS1, SS2, ... SSn.

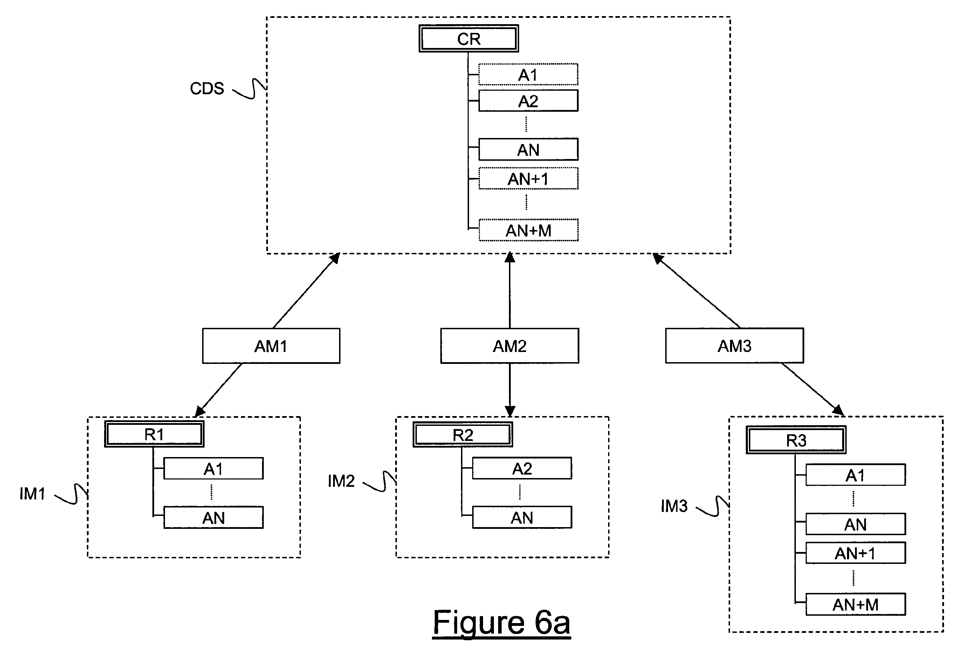

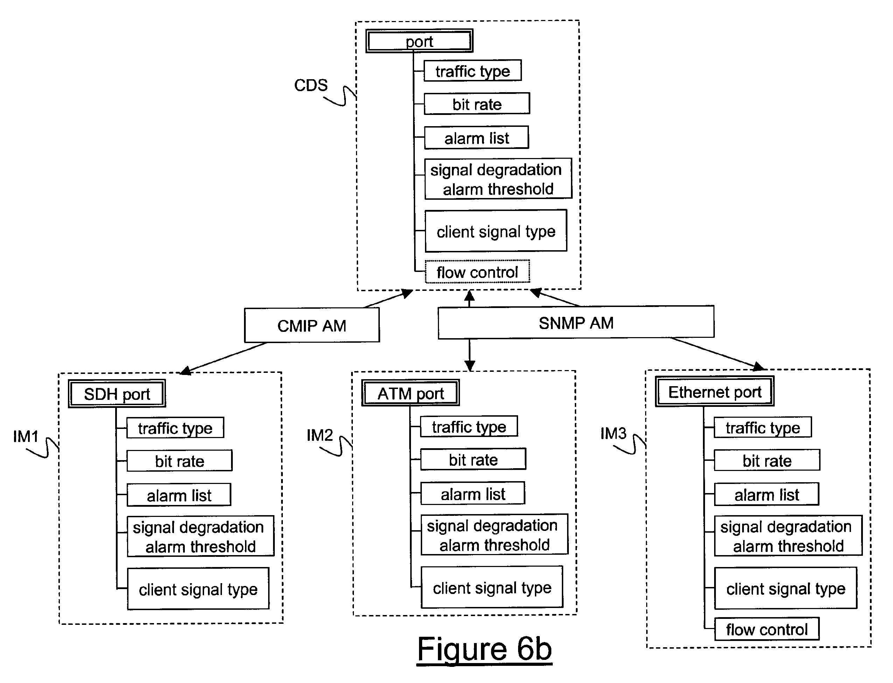

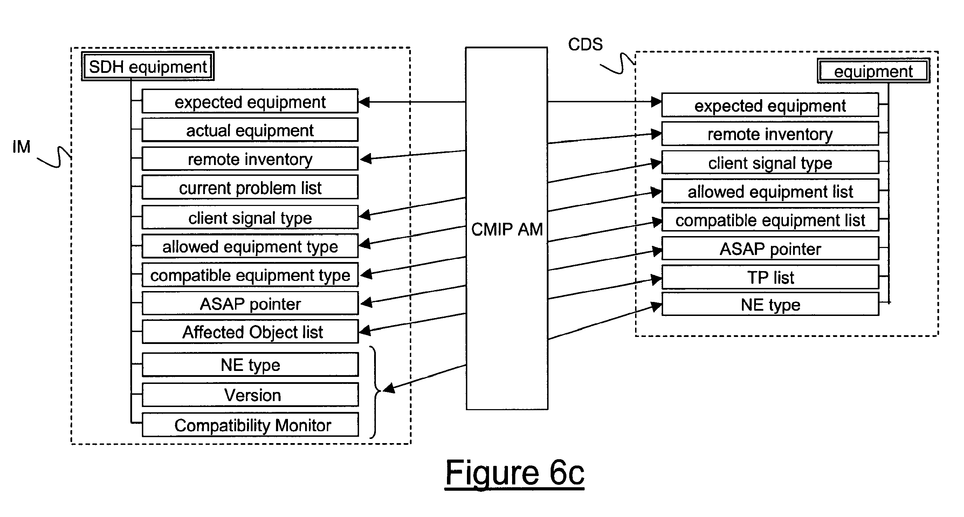

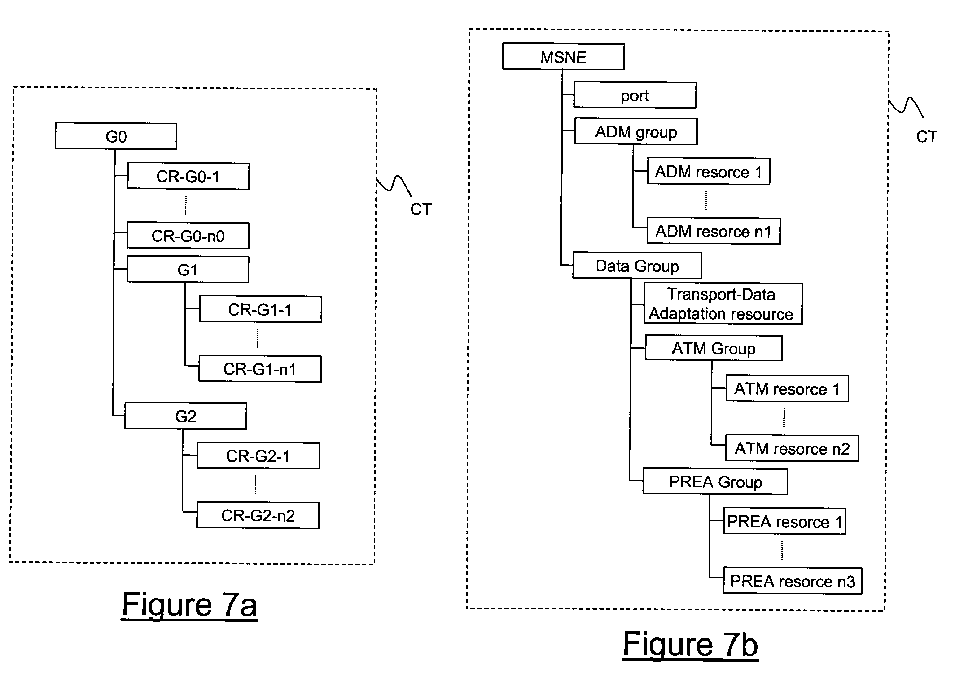

According to the present invention, a server EMS is provided with a Common Description System CDS, which provides a common description of the resources of the subsystems SS1, SS2, ... SSn. Profitably, such a common description may be object oriented. The detailed structure of the Common Description System CDS will be described by referring to Figure 6a, 6b, 7a and 7b. The Common Description System CDS communicates with a number of Adapter Modules (AM1, AM2, ..., AMn in Figure 5a), which allow to map the Information Model provided by each Agent in the Common Description System CDS. In other words, an Adapter Module creates a correspondence between the description of a resource into an Information Model and the description of the same resource provided by the Common Description System CDS. Agents communicating through the same Protocol use the same Adapter Module.

The Common Description System CDS is further connected to a Common Graphic User Interface CGUI, allowing a service provider to manage all the subsystems of the multi-service network element through a single interface.

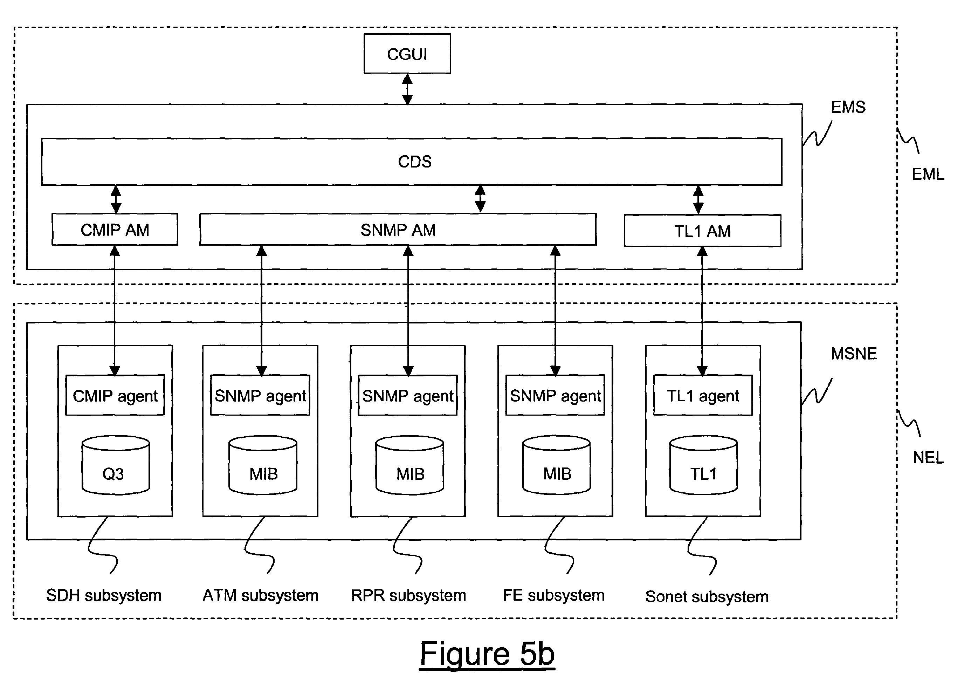

Figure 5b shows an example of an EMS server according to the present invention. The multi-service network element of Figure 5b comprises five subsystems: an SDH subsystem, an ATM subsystem, a FE subsystem, an RPR subsystem and a Sonet subsystem. The SDH subsystem comprises a CMIP agent providing the EMS server with a Q3 Information Model of the resources of the SDH subsystem. The Sonet subsystem comprises a TL1 agent providing the EMS server with a TL1 Information Model of the resources of the Sonet subsystem. Each of the other subsystems contains a respective SNMP agent; each SNMP agent provides the EMS server with an SNMP MIB Information Model of the resources of the respective subsystem. The EMS according to the present invention comprises a Common Description System CDS, a Common Graphic User Interface CGUI, a CMIP Adapter Module for mapping the Q3 Information Model into the Common Description System CDS, an SNMP Adapter Module for mapping the SNMP MIB Information Models into the Common Description System CDS and a TL1 Adapter Module for mapping the TL1 Information Model into the Common Description System CDS.

The Common Description System CDS, according to the present invention, provides a common description of the resources of the multi-service network element MSNE. Hereafter, by referring to Figures 6a, 6b and 6c, a common description of a resource provided by a Common Description System according to the present invention will be described.

Figure 6a shows a scheme of a common description of a resource provided by a Common Description System CDS according to the present invention. It is assumed that a first Information Model IM1 of a first subsystem provides a first description of a resource R1, which is described by a set of attributes A1, ... AN. Such a resource may be for instance a board, or a port. It is also assumed that a second Information Model IM2 of a second subsystem, whose transmission technology is different from the technology of the first subsystem, describes a second resource R2. In IM2, the resource R2 is described by a set A2, ... AN of attributes. Finally, it is assumed that a third Information model IM3 of a third subsystem, whose technology is different from the technology of the first and second subsystem, describes a third resource R3. In IM3, the resource R3 is described by a set of attributes A1, ... AN, AN+1, ... AN+M.

As a set of attributes A2, ... AN is common to the three resources R1, R2 and R3, the Common Description System CDS according to the present invention comprises a common resource CR, corresponding to the three resources R1, R2 and R3. Such a common resource (CR in Figure 6a) is described both by common attributes, and by the attributes which are specific of one or more Information Models. The common attributes A2, ... AN are always valid; the specific attribute A1 is valid only when either subsystem described by IM1 or subsystem described by IM3 is being managed; the specific attributes AN+1, ... AN+M are valid only when subsystem described by IM3 is being managed.

Hence, when a service provider is managing a multi-service network element comprising these three subsystems, according to the present invention, he visualizes, through the Common Graphic User Interface CGUI, the common resource CR whose common description is provided by the Common Description System CDS. This common resource CR is technology transparent, as a service provider interacting with this common representation CR is not required to know details about the transmission technology used to implement the resource.

A correspondence between the common resource CR, whose description is provided by the Common Description System, and the resources R1, R2, R3, whose descriptions are provided by the Information Models IM1, IM2 and IM3, is implemented through suitable Adapter Modules AM1, AM2, AM3. The function of Adapter Modules will be explained in greater detail with reference to Figure 6c.

Hereinafter, a first example of common description will be described with reference to Figure 6b. It is assumed that the resource is a port. An Information Model IM1 describes an SDH port, an Information Model IM2 describes an ATM port and an Information Model IM3 describes an Ethernet port. Still referring to Figure 3b, an example of a set of common attributes describing a port, independently from the technology, is:
- traffic type (SDH, Sonet, Ethernet, ATM, etc...);
- bitrate;
- alarm list;
- signal degradation alarm threshold;
- client signal type (optical or electrical).

For an Ethernet port, the description comprises also a specific attribute for the flow control, as mentioned above.

Thus, the common resource (port), whose description is provided by the Common Description System CDS, comprises all the above cited common attributes and the specific attribute for the flow control. This latter will be active at the Common Graphic User Interface only when the service provider is managing an Ethernet port. Otherwise, only the common attributes are active. In any case, a service provider can manage all the three types of port without caring about the type of port, by simply acting upon the common resource "port".

In the example of Figure 6b, a CMIP Adapter Module CMIP AM is provided for mapping the Q3 Information Model of the SDH port into the common port. Similarly, an SNMP Adapter Module is provided for mapping the SNMP MIB Information Models of the ATM port and Ethernet port into the common port. In this case, mapping each description into the common description simply requires to find a correspondence between each attribute of the description and the corresponding attribute of the common description. However, in a more general case, mapping a description into a common description requires other operations, as it will be explained herein after.

Figure 6c shows a second example of the common description of a resource. Figure 6c shows the description of an SDH equipment, provided by an Information Model IM. The SDH equipment is described by a list of attributes including:
- expected equipment;
- actual equipment;
- remote inventory;
- current problem list;
- client signal type;
- allowed equipment type;
- compatible equipment type; and
- ASAP pointer.

A Q3 Adapter Module is provided to map this description into a common description of a common resource "equipment" provided by the Common Description System CDS.

It has to be noticed that server EMS does not always require the whole description of a resource, but in some cases only a subset of the attributes describing a resource is required. For instance, in the example of Figure 6c, the "actual equipment" attribute and the "current problem list" attribute are not required by the EMS server. Thus, they are not inserted into the common description of the equipment, and they are not accessible through the Common Graphic User Interface CGUI. Therefore, an Adapter Module must know which attributes are required by the EMS server, and must provide mapping only for the required attributes.

Moreover, in some cases, a set of attributes describing a resource corresponds to a single attribute into the common description. For example, in Figure 6c, the SDH equipment comprises three attributes NE Type, Version and Compatibility monitor, which correspond to a single attribute NE type into the common description. Thus, an Adapter Module must be able to map the ensemble of a number of attributes into a single attribute.

After describing how a single resource can be described in a technology-independent way by the Common Description System CDS, hereinafter a description of the structure of a Common Description System CDS will be provided.

Figure 7a schematically shows a description of a multi-service network element MSNE provided by the Common Description System CDS, according to the present invention. As already mentioned, the Common Description System CDS preferably provides an object-oriented description of the network element MSNE. Advantageously, the object oriented Common Description System CDS is in the form of a tree diagram, wherein the source node G0 is the network element MSNE; the intermediate nodes are groups of resources comprised within the network element MSNE, while the terminal nodes are the single resources.

For building a Common Description System CDS according to the present invention, it is firstly required to check whether it is possible to identify resources whose description (i.e. the set of attributes and links) is at least partially common to all the Information Models of all the subsystems included into the network element MSNE. In affirmative case, a common representation of this resource is provided and inserted into the Common Description System CDS, as described with reference to Figure 6a. These resources are called common resources, and in Figure 7a they are referenced by CR-G0-1, ... CR-G0-n0.

Then, it is checked whether, among the remaining resources, it is possible to identify Groups, i.e. sets of resources whose description (i.e. the set of attributes and links) is at least partially common to at least two Information Models of subsystems included into the network element MSNE. For instance, in the Common Description System CDS of Figure 7a, two Groups G1, G2 are shown. The first Group G1 comprises common resources CR-G1-1, ... CR-G1-n1 whose description is at least partially common to a first set of Information Models; similarly, the second Group G2 comprises common resources CR-G2-1, ... CR-G2-n2 whose description is at least partially common to a second set of Information Models. In Figure 7a, only two Groups are shown; however, a Common Description System CDS may comprise more than two Groups. Further, each Group may also comprise one or more Sub-Groups.

The step of building Group and Sub-Groups is recursively repeated until all the resources of the network element MSNE have been described by the Common Description System CDS.

Figure 7b shows an example of a Common Description System CDS of a multi-service network element MSNE, according to the present invention.

It is assumed that the multi-service network element MSNE comprises an SDH subsystem (e.g., an ADM), an ATM subsystem (e.g., an ATM board) and a PREA subsystem (e.g., a PREA board). Each subsystem is represented by a respective Information Model.

The source node of the Common Description System CDS is the multi-service network element MSNE. As already mentioned, a port is a resource whose description is at least partially common to all the Models of all the subsystems included into the network element MSNE. Thus, a port may be an example of common resource.

Moreover, some resources of the subsystems PREA and ATM have a common description, while all the resources (except the ports) of the SDH subsystem have a description which is not common to the two other technologies. Thus, it is provided a first Group which is called ADM Group, containing all the resources of the ADM, except the ports. These resources are indicated in Figure 7b by ADM resource 1, ... ADM resource n1. Then, a second group is provided, which is termed Data Group, containing:
- all the resources whose representation is common to both ATM and PREA subsystem Models. For example, the Transport-Data Adaptation resource is a resource having a common representation both in ATM and PREA subsystem Models and highlighting the relationship between the transport termination point instance and data port instance;
- an ATM Group, containing resources specific of the ATM subsystem; and
- a PREA Group, containing resources specific of the PREA subsystem.

## Claims

1. An element management server (EMS) for managing a multi-service network element (MSNE) in a telecommunication network, said multi-service network element (MSNE) comprising:
- a first subsystem (SS1) based on a first transmission technology comprising a first set of resources described by a first information model (IM1); and
- a second subsystem (SS2) based on a second transmission technology comprising a second set of resources described by a second information model (IM2),
wherein said element management server (EMS) further comprises:
- a common description system (CDS) providing a common description of the resources comprised into said multi-service network element; and
- at least an adapter module (AM1, AM2, ... AMn), which is suitable to map said first information model (IM1) and/or said second information model (IM2) into said common description.

2. The server according to claim 1, wherein the common description system (CDS) provides an object oriented common description of the resources.

3. The server according to claim 2, wherein the object oriented common description is in the form of a tree diagram comprising a source node (G0), at least one intermediate node (G1, G2) and at least one terminal node (CR-G0-1), the source node (G0) corresponding to the multi-service network element, the at least one intermediate node (G1, G2) corresponding to at least one group of resources comprised within said network element and the at least one terminal node (CR-G0-1) corresponding to at least one resource comprised within said network element.

4. The server according to any of previous claims, further comprising a common graphic user interface (CGUI).

5. The server according to any of previous claims, wherein the description of each resource comprises a set of attributes (A-PR-1) and links (L1, Lp) to other resources.

6. The server according to claim 5, wherein said adapter module (AM1) is suitable to select attributes (A-PR-1) and links (L1, Lp) to be mapped in said common description.

7. The server according to claim 5 or 6, wherein said adapter module (AM1) is suitable to map attributes (A-PR-1) and links (L1, Lp) in said common description.

8. The server according to claim 5, 6 or 7, wherein said adapter module (AM1) is suitable to synthesize attributes (A-PR-1) and links (L1, Lp) in said common description.

9. A method for managing a multi-service network element in a telecommunication network, said multi-service network element (MSNE) comprising: a first subsystem (SS1) based on a first transmission technology comprising a first set of resources; and a second subsystem (SS2) based on a second transmission technology comprising a second set of resources, the method comprising:
- describing said first set of resources by a first information model (IM1); and
- describing said second set of resources by a second information model (IM2),
wherein said method further includes:
- providing a common description of said resources comprised into said multi-service network element; and
- mapping said first information model and/or said second Information Model in said common description.

10. The method according to claim 9, wherein the step of providing a common description comprises the step of providing an object oriented common description of the resources.

11. The method according to claim 10, wherein the step of providing an object oriented common description comprises the step of providing a common description in the form of a tree diagram, said tree diagram comprising a source node (G0), at least one intermediate node (G1, G2) and at least one terminal node (CR-G0-1), the source node (G0) corresponding to the multi-service network element, the at least one intermediate node (G1, G2) corresponding to at least one group of resources comprised within said network element and the at least one terminal node (CR-G0-1) corresponding to at least one resource comprised within said network element.

12. The method according to any of claims 9-11, further comprising the step of providing a common graphic user interface (CGUI).

13. The method according to any of claims 9-12, wherein the steps of describing said first set of resources by a first information model (IM1) and describing said second set of resources by a second information model (IM2) comprise a step of describing a set of attributes (A-PR-1) and links (L1, Lp) to said resources.

14. The method according to claim 13, wherein said step of mapping comprises selecting attributes (A-PR-1) and links (L1, Lp) to be mapped in said common description.

15. The method according to any of claims 13 or 14, wherein said step of mapping comprises mapping attributes (A-PR-1) and links (L1, Lp) in said common description.

16. The method according to any of claims 13-15, wherein said step of mapping comprises synthesizing attributes (A-PR-1) and links (L1, Lp) in said common description.

17. A common description system (CDS) providing a common description of resources comprised into a multi-service network element (MSNE) in a telecommunication network, said multi-service network element (MSNE) comprising:
- a first subsystem (SS1) based on a first transmission technology comprising a first set of resources described by a first information model (IM1); and
- a second subsystem (SS2) based on a second transmission technology comprising a second set of resources described by a second information model (IM2).

18. The common description system (CDS) according to claim 17,
wherein it cooperates with at least an adapter module (AM1, AM2, ... AMn), which is suitable to map said first information model (IM1) and/or said second information model (IM2) into said common description.

19. An adapter module (AM1, AM2, ... AMn) for mapping a first information model (IM1) and/or a second information model (IM2) into a common description system (CDS) of an element management server (EMS) for managing a multi-service network element (MSNE) in a telecommunication network, said multi-service network element (MSNE) comprising:
- a first subsystem (SS1) based on a first transmission technology comprising a first set of resources described by the first information model (IM1); and
- a second subsystem (SS2) based on a second transmission technology comprising a second set of resources described by the second information model (IM2),
said common description system (CDS) providing a common description of the resources comprised into said multi-service network element.

20. A common graphic user interface (CGUI) for configuring and/or managing a multi-service network element, said multi-service network element (MSNE) comprising:
- a first subsystem (SS1) based on a first transmission technology comprising a first set of resources described by a first information model (IM1); and
- a second subsystem (SS2) based on a second transmission technology comprising a second set of resources described by a second information model (IM2),
wherein it cooperates with a common description system (CDS) providing a common description of the resources comprised into said multi-service network element.

21. The common graphic user interface (CGUI) according to claim 20, wherein it is adapted to display both configurable parameters for the first subsystem (SS1) and configurable parameters for the second system (SS2).

22. A telecommunication network comprising at least one element management server (EMS) according to any of claims 1-8.
